(19) Europäisches Patentamt
European Patent Office
Office européen des brevets

(11) Veröffentlichungsnummer: **0 460 496 B1**

# (12) EUROPÄISCHE PATENTSCHRIFT

(45) Veröffentlichungstag der Patentschrift: **30.11.94**

(51) Int. Cl.$^{5}$: **C09B 1/22**, C09B 5/62

(21) Anmeldenummer: **91108643.7**

(22) Anmeldetag: **28.05.91**

## (54) Tetraaminoanthrachinonfarbstoffe.

(30) Priorität: **07.06.90 DE 4018229**

(43) Veröffentlichungstag der Anmeldung:
**11.12.91 Patentblatt 91/50**

(45) Bekanntmachung des Hinweises auf die Patenterteilung:
**30.11.94 Patentblatt 94/48**

(84) Benannte Vertragsstaaten:
**CH DE FR GB IT LI**

(56) Entgegenhaltungen:
**EP-A- 0 023 645**
**CH-A- 333 932**
**DE-A- 2 853 920**
**US-A- 3 268 552**

**PATENT ABSTRACTS OF JAPAN; unexamined applications, C. Field, Band 11, Nr. 163 THE PATENT OFFICE JAPANESE GOVERNMENT**

(73) Patentinhaber: **BASF Aktiengesellschaft**
**Carl-Bosch-Strasse 38**
**D-67063 Ludwigshafen (DE)**

(72) Erfinder: **Etzbach, Karl-Heinz, Dr.**
**Carl-Bosch-Ring 55**
**W-6710 Frankenthal (DE)**
Erfinder: **Hauptreif, Manfred, Dr.**
**Leinstrasse 11**
**W-6700 Ludwigshafen (DE)**

**EP 0 460 496 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Anthrachinonfarbstoffe der Formel I

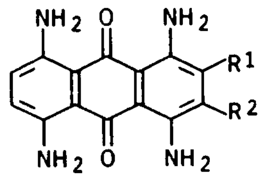

(I),

in der

$R^1$ und $R^2$ jeweils für Cyano oder zusammen für einen Rest der Formel

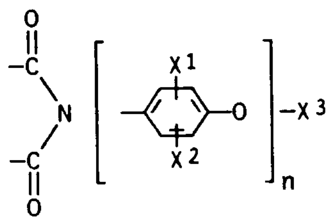

stehen, worin

- n 0 oder 1,
- $X^1$ und $X^2$ gleich oder verschieden sind und unabhängig voneinander jeweils Wasserstoff, $C_1$-$C_4$-Alkyl oder Halogen und
- $X^3$ Wasserstoff oder $C_1$-$C_{26}$-Alkyl, das gegebenenfalls durch ein oder mehrere Sauerstoffatome in Etherfunktion unterbrochen ist und durch Cyano, Halogen, Hydroxy, Amino, Vinyl, $C_1$-$C_6$-Alkanoyloxy, $C_3$-$C_4$-Alkenoyloxy oder $C_3$-$C_4$-Halogenalkenoyloxy, substituiert sein kann, bedeuten.

Aus der EP-A-171 045 sind Polymerfarbstoffe bekannt, deren monomerer Chromophor sich von 1,4-Diaminoanthrachinon-2,3-dicarbonsäureimid ableitet, das am Imidstickstoffatom den 6-Acryloyloxyhexylrest aufweist.

Weiterhin sind aus der JP-A-87 757/1986 und der JP-A-291 653/1986 Farbstoffe bekannt, die sich von 1,4,5,6-Tetraaminoanthrachinon-2-3-dicarbonsäureimid ableiten, wobei an das Imidstickstoffatom ein Phenylring geknüpft ist, der durch Phenylazo oder durch einen Naphthalin-2,3-dicarbonsäureimidrest substituiert ist.

Schließlich beschreibt die ältere europäische Patentanmeldung Nr. 90 119 209.6 Farbstoffe auf Basis von 1,4,5,6-Tetraaminoanthrachinon-2,3-dicarbonsäureimid, die am Imidstickstoffatom einen über eine $C_{12}$-Alkylenbrücke verknüpften Malonsäurediethylesterest aufweisen.

Aufgabe der vorliegenden Erfindung war es nun, neue Anthrachinonfarbstoffe bereitzustellen, die über vorteilhafte anwendungstechnische Eigenschaften, insbesondere über eine gute Löslichkeit, verfügen und die sich vorteilhaft für die Herstellung von flüssig-kristallinen Polymeren eignen.

Demgemäß wurden die eingangs näher bezeichneten Anthrachinonfarbstoffe der Formel I gefunden.

Alle in den obengenannten Formeln auftretenden Alkylreste können sowohl geradkettig als auch verzweigt sein.

Wenn der Rest $X^3$ einen Alkylrest bedeutet, der durch ein oder mehrere Sauerstoffatome in Etherfunktion unterbrochen ist, so sind dabei insbesondere solche Alkylreste zu nennen, die durch 1 bis 10, insbesondere 1 bis 6 Sauerstoffatome unterbrochen sind.

Reste $X^1$, $X^2$ und $X^3$ sind z.B. Methyl, Ethyl, Propyl, Isopropyl, Butyl, Isobutyl, sec-Butyl oder tert-Butyl.

Reste $X^1$ und $X^2$ sind weiterhin z.B. Fluor, Chlor oder Brom.

Reste $X^3$ sind weiterhin z.B. Pently, Isopentyl, Neopentyl, tert-Pentyl, Hexyl, 2-Methylpentyl, Heptyl, 1-Ethylpentyl, Octyl, 2-Ethylhexyl, Isooctyl, Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl, Eicosyl, Heneicosyl,

Docosyl, Tricosyl, Tetracosyl, Pentacosyl oder Hexacosyl. (Die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436.).

Reste $X^3$ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- oder 4-Butoxybutyl, 4,8-Dioxadecyl, 3,6,8-Trioxadecyl, 3,6,9-Trioxaundecyl, 3,6,9,12-Tetraoxatridecyl, 3,6,9,12-Tetraoxatetradecyl, 2-Chlorethyl, 3-Chlorpropyl, 4-Chlorbutyl, 5-Chlorpentyl, 6-Chlorhexyl, 7-Chlorheptyl, 8-Chloroctyl, 9-Chlornonyl, 10-Chlordecyl, 11-Chlorundecyl, 12-Chlordodecyl, 13-Chlortridecyl, 2-Hydroxyethyl, 3-Hydroxypropyl, 4-Hydroxybutyl, 5-Hydroxypentyl, 6-Hydroxyhexyl, 7-Hydroxyheptyl, 8-Hydroxyoctyl, 9-Hydroxynonyl, 10-Hydroxydecyl, 11-Hydroxyundecyl, 12-Hydroxydodecyl, 13-Hydroxytridecyl, 2-Aminoethyl, 3-Aminopropyl, 4-Aminobutyl, 5-Aminopentyl, 6-Aminohexyl, 7-Aminoheptyl, 8-Aminooctyl, 9-Aminononyl, 10-Aminodecyl, 11-Aminoundecyl, 12-Aminododecyl, 13-Aminotridecyl, Prop-2-en-1-yl, But-3-en-1-yl, Pent-4-en-1-yl, Hex-5-en-1-yl, Hept-6-en-1-yl, Oct-7-en-1-yl, Non-8-en-1-yl, Dec-9-en-1-yl, Undec-10-en-1-yl, Dodec-11-en-1-yl, Tridec-12-en-1-yl, 2-Acetoxyethyl, 3-Acetoxypropyl, 4-Acetoxybutyl, 5-Acetoxypentyl, 6-Acetoxyhexyl, 7-Acetoxyheptyl, 8-Acetoxyoctyl, 9-Acetoxynonyl, 10-Acetoxydecyl, 11-Acetoxyundecyl, 12-Acetoxydodecyl, 13-Acetoxytridecyl, 2-Acryloyloxyethyl, 3-Acryloyloxypropyl, 4-Acryloyloxybutyl, 5-Acryloyloxypentyl, 6-Acryloyloxyhexyl, 7-Acryloyloxyheptyl, 8-Acryloyloxyoctyl, 9-Acryloyloxynonyl, 10-Acryloyloxydecyl, 11-Acryloyloxyundecyl, 12-Acryloyloxydodecyl, 13-Acryloyloxytridecyl, 2-Methacryloyloxyethyl, 3-Methacryloyloxypropyl, 4-Methacryloyloxybutyl, 5-Methacryloyloxypentyl, 6-Methacryloyloxyhexyl, 7-Methacryloyloxyheptyl, 8-Methacryloyloxyoctyl, 9-Methacryloyloxynonyl, 10-Methacryloyloxydecyl, 11-Methacryloyloxyundecyl, 12-Methacryloyloxydodecyl, 13-Methacryloyloxytridecyl, 2-(α-Chloracryloyloxy)ethyl, 3-(α-Chloracryloyloxy)propyl, 4-(α-Chloracryloyloxy)butyl, 5-(α-Chloracryloyloxy)pentyl, 6-(α-Chloracryloyloxy)hexyl, 7-(α-Chloracryloyloxy)heptyl, 8-(α-Chloracryloyloxy)octyl, 9-(α-Chloracryloyloxy)nonyl, 10-(α-Chloracryloyloxy)-decyl, 11-(α-Chloracryloyloxy)undecyl, 12-(α-Chloracryloyloxy)dodecyl, 13-(α-Chloracryloyloxy)tridecyl, 3,3-Dicyanopropyl, 4,4-Dicyanobutyl, 5,5-Dicyanopentyl, 6,6-Dicyanohexyl, 7,7-Dicyanoheptyl, 8,8-Dicyanooctyl, 9,9-Dicyanononyl, 10,10-Dicyanodecyl, 4-Hydroxyphenyl, 4-(5-Chlorpentyloxy)phenyl, 4-(6-Chlorhexyloxy)-phenyl, 4-(5-Hydroxypentyloxy)phenyl, 4-(6-Hydroxyhexyloxy)phenyl, 4-(5-Aminopentyloxy)phenyl, 4-(6-Aminohexyloxy)phenyl, 4-(Pent-4-en-1-yloxy)phenyl, 4-(Hex-5-en-1-yloxy)phenyl, 4-(5-Acetyloxypentyloxy)-phenyl, 4-(6-Acetyloxyhexyloxy)phenyl, 4-(5-Acryloyloxypentyloxy)phenyl, 4-(6-Acryloyloxyhexyloxy)phenyl, 4-(5-Methacryloyloxypentyloxy)phenyl, 4-(6-Methacryloyloxyhexyloxy)phenyl, 4-[5-(α-Chloracryloyloxy)-pentyloxy]phenyl, 4-[6-(α-Chloracryloyloxy)hexyloxy]phenyl, 4-(5,5-Dicyanopentyloxy)phenyl oder 4-(6,6-Dicyanohexyloxy)phenyl.

Bevorzugt sind Anthrachinonfarbstoffe, die der Formel Ia

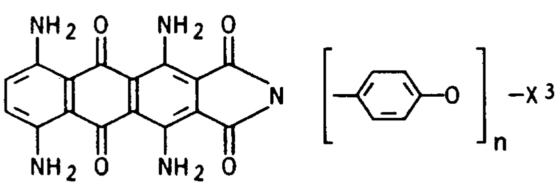 (Ia)

gehorchen, worin

n 0 oder 1 und

$X^3$ Wasserstoff oder $C_1$-$C_{13}$-Alkyl, das gegebenenfalls durch 1 bis 6 Sauerstoffatome in Etherfunktion unterbrochen ist und durch Cyano, Halogen, Hydroxy, Amino, Vinyl, $C_1$-$C_6$-Alkanoyloxy, $C_3$-$C_4$-Alkenoyloxy oder $C_3$-$C_4$-Halogenalkenoyloxy substituiert sein kann,

bedeuten.

Besonders bevorzugt sind Anthrachinonfarbstoffe der Formel Ia, in der

n 0 und

$X^3$ Wasserstoff oder $C_1$-$C_{13}$-Alkyl, das gegebenenfalls durch Vinyl, $C_3$-$C_4$-Alkenoyloxy oder $C_3$-$C_4$-Halogenalkenoyloxy substituiert ist, oder

n 1 und

$X^3$ Wasserstoff oder $C_1$-$C_{13}$-Alkyl, das gegebenenfalls durch 1 bis 6 Sauerstoffatome in Etherfunktion unterbrochen ist und durch Vinyl, $C_3$-$C_4$-Alkenoyloxy oder $C_3$-$C_4$-Halogenalkenoyloxy substituiert

sein kann,
bedeuten.

Insbesondere hervorzuheben sind Anthrachinonfarbstoffe der Formel Ia, in der

n 0 oder 1 und

$X^3$ Wasserstoff oder $C_4$-$C_{13}$-Alkyl, das durch Acryloyloxy, Methacryloyloxy oder α-Chloracryloyloxy substituiert sein kann.

Von besonderem Interesse sind Anthrachinonfarbstoffe der Formel I, in der $R^1$ und $R^2$ jeweils Cyano bedeuten.

Von besonderem Interesse sind weiterhin Anthrachinonfarbstoffe der Formel Ia, in der

n 0 und

$X^3$ $C_4$-$C_{11}$-Alkyl, das durch Acryloyloxy oder Methacryloyloxy substituiert und gegebenenfalls durch ein oder zwei Sauerstoffatome in Etherfunktion unterbrochen ist, bedeuten.

Von besonderem Interesse sind weiterhin Anthrachinonfarbstoffe der Formel Ia, in der

n 0 und

$X^3$ $C_4$-$C_{11}$-Alkyl, das gegebenenfalls durch ein oder zwei Sauerstoffatome in Etherfunktion unterbrochen ist, bedeuten.

Die neuen Anthrachinonfarbstoffe der Formel I können nach an sich bekannten Methoden erhalten werden.

Beispielsweise kann der Bisdifluorbor-Komplex von 1,4,5,8-Tetraaminoanthrachinon mit Alkalicyaniden zu 1,4,5,8-Tetraamino-2,3-dicyanoanthrachinon der Formel II

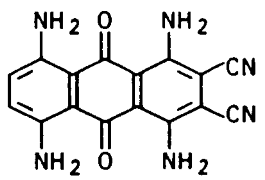

(II)

umgesetzt werden. Dies kann z.B. mittels der aus der EP-A-239 538 bekannten Methode geschehen.

Die Dicyanoverbindung kann dann mittels Schwefelsäure in das Dicarbonsäureimid der Formel III

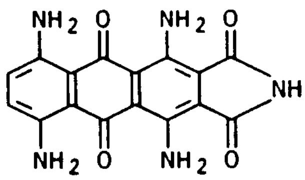

(III)

übergeführt werden.

Durch Umsetzung beispielsweise mit Halogenverbindungen der Formel IV

Hal-$X^4$ (IV),

in der Hal für Halogen steht und $X^4$, mit Ausnahme von Wasserstoff, die Bedeutung von $X^3$ besitzt, oder mit Anilinen der Formel V

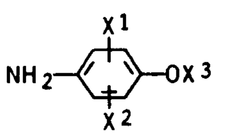

(V),

in der $X^1$, $X^2$ und $X^3$ jeweils die obengenannte Bedeutung besitzen, gelangt man zu solchen erfindungsgemäßen Anthrachinonfarbstoffen der Formel I, in der das Imidstickstoffatom substituiert ist.

Die neuen Anthrachinonfarbstoffe sind außerordentlich lichtbeständig und weisen eine gute Löslichkeit in den gebräuchlichen organischen Lösungsmitteln, beispielsweise in N,N-Dimethylformamid, Tetrahydrofuran, Toluol oder Dichlormethan auf.

Sie sind vorteilhaft geeignet, um synthetische Materialien, z.B. Gewebe aus Polyester, Celluloseacetat oder Polyamid, zu färben. Sie sind außerdem für die Herstellung von Polymeren geeignet.

Sie eignen sich weiterhin vorteilhaft als flüssigkristalline Farbstoffe.

Insbesondere sind sie für die Herstellung von flüssigkristallinen Polymeren geeignet.

Verbindungen, die flüssigkristallines Verhalten zeigen, d.h. flüssigkristalline Phasen ausbilden, werden auch als Mesogene bezeichnet. Dabei handelt es sich um optisch anisotrope Flüssigkeiten, welche im Gegensatz zu normalen Flüssigkeiten eine Fernordnung ihrer Moleküle aufweisen. Beim Schmelzen einer festen mesogenen Verbindung bildet sich daher zunächst eine flüssigkristalline Phase, z.B. eine smektische, die bei weiterer Temperaturerhöhung bei einer bestimmten Phasenübergangstemperatur entweder in eine weitere Phase, z.B. eine nematisch flüssigkristalline Phase, oder in die optisch isotrope Schmelze übergeht. Kühlt man letztere wieder ab, so bilden sich bei den entsprechenden Umwandlungstemperaturen die flüssigkristallinen Phasen und letztlich der kristalline Zustand wieder zurück. Bei Polymeren mit mesogenen Seitengruppen, d.h Gruppen, die sich von mesogenen Verbindungen ableiten, ist es indes möglich, den einmal erzeugten flüssigkristallinen Zustand beim Abkühlen einzufrieren, wenn man die flüssigkristalline Polymerschmelze unter eine bestimmte Temperatur, z.B. die Glastemperatur des Polymeren, abkühlt, so daß ein optisch anisotroper Festkörper resultiert, der nicht kristallin, sondern glasförmig ist.

Flüssigkristalline Phasen können in der Schmelze oder in eingefrorenem Zustand leicht anhand ihrer optischen Anisotropie nachgewiesen werden. So zeigen sie beispielsweise unter dem Polarisationsmikroskop bei gekreuzten Polarisatoren doppelbrechende Texturen, wogegen isotrope Schmelzen dunkel erscheinen.

Man kann daher Schichten, die mesogene Verbindungen enthalten, zur Informationsaufzeichnung verwenden, indem man durch lokales Erhitzen in solche Schichten Bereiche mit veränderten optischen Eigenschaften erzeugt. Diese Bereiche können nach dem Abkühlen, sofern sie dann stabil sind, nachgewiesen, d.h. "gelesen" werden.

Flüssigkristalline Phasen lassen sich in nematische, smektische und cholesterische Phasen einteilen. Hierbei sind in einer nematisch flüssigkristallinen Phase die Schwerpunkte der Moleküle unregelmäßig verteilt, indes existiert eine Vorzugsrichtung, in der die Moleküllängsachsen der mesogenen Verbindungen ausgerichtet sind. Eng verwandt mit der nematischen ist die cholesterische flüssigkristalline Phase. Hierin sind die mesogenen Verbindungen in Mikroschichten angeordnet, wobei sich in einer einzelnen Schicht die Moleküllängsachsen nach einer bestimmten Vorzugsrichtung einheitlich ausrichten. Beim Übergang von einer Mikroschicht zur nächsten ändert sich indes die Vorzugsrichtung der Orientierung stetig in einem Drehsinn, so daß insgesamt eine schraubenförmige, helixartige Struktur der cholesterisch flüssigkristallinen Phase resultiert. Bei der smektisch flüssigkristallinen Phase werden die mesogenen Verbindungen durch die intermolekularen Wechselwirkungen parallel ausgerichtet und zu Mikroschichten zusammengefügt, die mit jeweils gleichen Abständen übereinander gestapelt sind.

Die Verträglichkeit der neuen Farbstoffe mit dem Wirtsmaterial ist erstaunlich gut und ihre Löslichkeit im Wirtsmaterial hervorragend. Im Flüssigkristall zeichnen sie sich durch hohe Ordnungsgrade aus.

Besonders hervorzuheben sind diejenigen Anthrachinonfarbstoffe, die sich aufgrund ihrer Substituenten in Polymere, bevorzugt flüssigkristalline Polymere, einpolymerisieren lassen. Diese Anthrachinonfarbstoffe inhibieren die Polymerisation nicht und zeigen in polymeren Flüssigkristallen hohe Ordnungsgrade.

Dabei sind insbesondere farbstoffhaltige Polyacrylate oder Polymethacrylate hervorzuheben. Ihre Herstellung erfolg nach an sich bekannten Methoden.

Auch farbstoffhaltige Polysiloxane sind hervorzuheben. Ihre Herstellung kann in einer polymeranalogen Reaktion (siehe z.B. Makromol. Chem., Rapid Commun. Band 7, Seite 71 bis 76, 1986) erfolgen.

Die folgenden Beispiele sollen die Erfindung näher erläutern.

Beispiel 1

a)

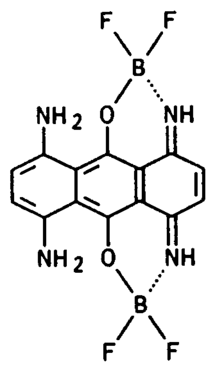

20 g (0,075 mol) Tetraaminoanthrachinon wurden in 400 ml 1,2-Dichlorbenzol bei 160 °C suspendiert. Bei 140 °C wurden 46 ml Bortrifluoriddiethyletherat zugegeben. Es wurde dann 17 Stunden bei 140 °C nachgerührt, anschließend auf 120 °C abgekühlt und abgesaugt. Der Rückstand wurde mit 400 ml Toluol und dann mit 400 ml Petrolether gewaschen. Nach dem Trocknen unter vermindertem Druck wurde der Komplex sofort weiter umgesetzt.

b)

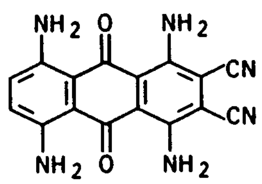

In 500 ml Pyrrolidin-2-on wurden 34 g (0,68 mol) Natriumcyanid und 106 g (0,42 mol) des Natriumsalzes der 3-Nitrobenzolsulfonsäure suspendiert. Bei 50 °C wurden portionsweise insgesamt 50 g (0,14 mol) des unter a) beschriebenen Tetraaminoanthrachinon-bis-difluoroborkomplexes zugegeben. Es wurde dann 20 Stunden bei 80 °C gerührt. Anschließend wurde 1 l Wasser zugegeben und 2 Stunden unter Rückfluß erhitzt. Der Rückstand wurde abfiltriert und getrocknet. Aus diesem Rückstand erhielt man durch Extraktion mit Pyridin 9,6 g Tetraamino-2,3-dicyanoanthrachinon (22 % d. Th.).

c)

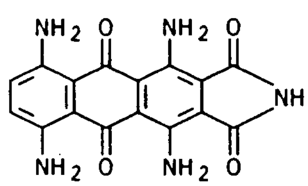

3,9 g des unter b) beschriebenen 1,4,5,8-Tetraamino-2,3-dicyanoanthrachinon wurden unter Rühren bei 20 °C in 16 g 96 gew.-%ige Schwefelsäure eingerührt und innerhalb von 20 Minuten auf 60 °C erhitzt. In weiteren 45 Minuten wurde auf 110 °C erhitzt und die Temperatur 1 Stunde lang gehalten. Die Reaktionsmischung wurde auf 30 °C abgekühlt und 9 ml Wasser wurden so zugegeben, daß die Temperatur zwischen 45 und 60 °C blieb. Nach 15 Minuten wurde abgesaugt und zunächst mit 50 gew.-%iger Schwefelsäure, dann mit Wasser gewaschen. Nach dem Trocknen erhielt man 2,6 g 1,4,5,8-Tetraaminoanthrachinon-2,3-dicarbonsäureimid (63 % d. Th.).

Beispiel 2

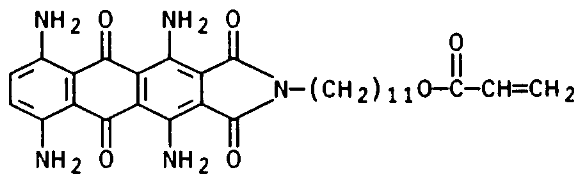

In ein Gemisch aus 5,2 g (0,015 mol) 1,4,5,8-Tetraaminoanthrachinon-2,3-dicarbonsäureimid und 50 g Dimethylsulfoxid wurden bei 25 °C 1,73 g Kalium-tert-butylat gegeben. Nach 30 minütigem Rühren bei dieser Temperatur trug man 4,7 g 11-Bromundecylacrylat sowie katalytische Mengen Hydrochinon und Kaliumiodid in das Gemisch ein, rührte 16 Stunden bei 25 °C und 4 Stunden bei 100 °C, kühlte danach ab und gab 70 ml Aceton hinzu. Der Niederschlag wurde abgesaugt und verworfen. Das Filtrat wurde anschließend auf 300 g Eiswasser gefällt, abgesaugt und getrocknet. Man erhielt so 3,3 g (38 % d. Th.) des Farbstoffs der obengenannten Formel. Schmelzpunkt: 155 - 162 °C.

Beispiel 3

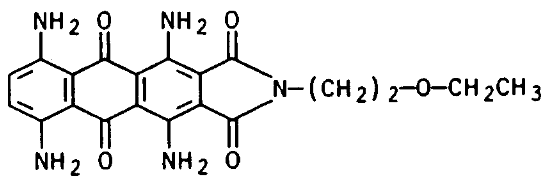

Ein Gemisch von 12,6 g 1,4,5,8-Tetraaminoanthrachinon-2,3-dicarbonsäureimid, 1,08 g 2-Bromethylethylether, 1,1 g Kaliumcarbonat und 25 g N,N-Dimethylformamid wurde 16 Stunden auf 100 °C erhitzt und dann abgekühlt. Anschließend fällte man auf 300 g Eiswasser, saugte ab, trocknete und kristallisierte aus Toluol um.
Ausbeute: 2,95 g (16,4 % d. Th.)
Schmelzpunkt: 262 - 269 °C.

In analoger Weise werden die in den folgenden Tabellen aufgeführten Verbindungen erhalten.

| Verb.-Nr. | R |
|---|---|
| 4 | $-(CH_2)_2-O-CH_2CH_3$ |
| 5 | $-(CH_2)_2-O-(CH_2)CH_3$ |
| 6 | $-(CH_2)_2-Br$ |
| 7 | $-(CH_2)_3-Br$ |
| 8 | $-(CH_2)_4-Br$ |
| 9 | $-(CH_2)_5-Br$ |
| 10 | $-(CH_2)_6-Br$ |
| 11 | $-(CH_2)_7-Br$ |
| 12 | $-(CH_2)_8-Br$ |
| 13 | $-(CH_2)_9-Br$ |
| 14 | $-(CH_2)_{10}-Br$ |
| 15 | $-(CH_2)_{11}-Br$ |
| 16 | $-(CH_2)_{12}-Br$ |
| 17 | $-(CH_2)_{13}-Br$ |
| 18 | $-(CH_2)_{14}-Br$ |
| 19 | $-(CH_2)_{15}-Br$ |
| 20 | $-(CH_2)_{16}-Br$ |
| 21 | $-(CH_2)_{17}-Br$ |
| 22 | $-(CH_2)_{18}-Br$ |
| 23 | $-(CH_2)_{19}-Br$ |
| 24 | $-(CH_2)_{20}-Br$ |
| 25 | $-(CH_2)_{21}-Br$ |
| 26 | $-(CH_2)_2-Cl$ |
| 27 | $-(CH_2)_3-Cl$ |
| 28 | $-(CH_2)_4-Cl$ |
| 29 | $-(CH_2)_5-Cl$ |
| 30 | $-(CH_2)_6-Cl$ |
| 31 | $-(CH_2)_7-Cl$ |
| 32 | $-(CH_2)_8-Cl$ |
| 33 | $-(CH_2)_9-Cl$ |
| 34 | $-(CH_2)_{10}-Cl$ |
| 35 | $-(CH_2)_{11}-Cl$ |
| 36 | $-(CH_2)_{12}-Cl$ |
| 37 | $-(CH_2)_{13}-Cl$ |
| 38 | $-(CH_2)_{14}-Cl$ |

| Verb.-Nr. | R |
|---|---|
| 39 | $-(CH_2)_{15}-Cl$ |
| 40 | $-(CH_2)_{16}-Cl$ |
| 41 | $-(CH_2)_{17}-Cl$ |
| 42 | $-(CH_2)_{18}-Cl$ |
| 43 | $-(CH_2)_{19}-Cl$ |
| 44 | $-(CH_2)_{20}-Cl$ |
| 45 | $-(CH_2)_{21}-Cl$ |
| 46 | $-(CH_2)_2-OH$ |
| 47 | $-(CH_2)_3-OH$ |
| 48 | $-(CH_2)_4-OH$ |
| 49 | $-(CH_2)_5-OH$ |
| 50 | $-(CH_2)_6-OH$ |
| 51 | $-(CH_2)_7-OH$ |
| 52 | $-(CH_2)_8-OH$ |
| 53 | $-(CH_2)_9-OH$ |
| 54 | $-(CH_2)_{10}-OH$ |
| 55 | $-(CH_2)_{11}-OH$ |
| 56 | $-(CH_2)_{12}-OH$ |
| 57 | $-(CH_2)_{13}-OH$ |
| 58 | $-(CH_2)_{14}-OH$ |
| 59 | $-(CH_2)_{15}-OH$ |
| 60 | $-(CH_2)_{16}-OH$ |
| 61 | $-(CH_2)_{17}-OH$ |
| 62 | $-(CH_2)_{18}-OH$ |
| 63 | $-(CH_2)_{19}-OH$ |
| 64 | $-(CH_2)_{20}-OH$ |
| 65 | $-(CH_2)_{20}-OH$ |
| 66 | $-(CH_2)_2-O(CO)CH=CH_2$ |
| 67 | $-(CH_2)_3-O(CO)CH=CH_2$ |
| 68 | $-(CH_2)_4-O(CO)CH=CH_2$ |
| 69 | $-(CH_2)_5-O(CO)CH=CH_2$ |
| 70 | $-(CH_2)_6-O(CO)CH=CH_2$ |
| 71 | $-(CH_2)_7-O(CO)CH=CH_2$ |
| 72 | $-(CH_2)_8-O(CO)CH=CH_2$ |
| 73 | $-(CH_2)_9-O(CO)CH=CH_2$ |

| Verb.-Nr. | R |
|---|---|
| 74 | $-(CH_2)_{10}-O(CO)CH=CH_2$ |
| 75 | $-(CH_2)_{11}-O(CO)CH=CH_2$ |
| 76 | $-(CH_2)_{12}-O(CO)CH=CH_2$ |
| 77 | $-(CH_2)_{13}-O(CO)CH=CH_2$ |
| 78 | $-(CH_2)_{14}-O(CO)CH=CH_2$ |
| 79 | $-(CH_2)_{15}-O(CO)CH=CH_2$ |
| 80 | $-(CH_2)_{16}-O(CO)CH=CH_2$ |
| 81 | $-(CH_2)_{17}-O(CO)CH=CH_2$ |
| 82 | $-(CH_2)_{18}-O(CO)CH=CH_2$ |
| 83 | $-(CH_2)_{19}-O(CO)CH=CH_2$ |
| 84 | $-(CH_2)_{20}-O(CO)CH=CH_2$ |
| 85 | $-(CH_2)_{21}-O(CO)CH=CH_2$ |
| 86 | $-(CH_2)_2-O(CO)C(CH_3)=CH_2$ |
| 87 | $-(CH_2)_3-O(CO)C(CH_3)=CH_2$ |
| 88 | $-(CH_2)_4-O(CO)C(CH_3)=CH_2$ |
| 89 | $-(CH_2)_5-O(CO)C(CH_3)=CH_2$ |
| 90 | $-(CH_2)_6-O(CO)C(CH_3)=CH_2$ |
| 91 | $-(CH_2)_7-O(CO)C(CH_3)=CH_2$ |
| 92 | $-(CH_2)_8-O(CO)C(CH_3)=CH_2$ |
| 93 | $-(CH_2)_9-O(CO)C(CH_3)=CH_2$ |
| 94 | $-(CH_2)_{10}-O(CO)C(CH_3)=CH_2$ |
| 95 | $-(CH_2)_{11}-O(CO)C(CH_3)=CH_2$ |
| 96 | $-(CH_2)_{12}-O(CO)C(CH_3)=CH_2$ |
| 97 | $-(CH_2)_{13}-O(CO)C(CH_3)=CH_2$ |
| 98 | $-(CH_2)_{14}-O(CO)C(CH_3)=CH_2$ |
| 99 | $-(CH_2)_{15}-O(CO)C(CH_3)=CH_2$ |
| 100 | $-(CH_2)_{16}-O(CO)C(CH_3)=CH_2$ |
| 101 | $-(CH_2)_{17}-O(CO)C(CH_3)=CH_2$ |
| 102 | $-(CH_2)_{18}-O(CO)C(CH_3)=CH_2$ |
| 103 | $-(CH_2)_{19}-O(CO)C(CH_3)=CH_2$ |
| 104 | $-(CH_2)_{20}-O(CO)C(CH_3)=CH_2$ |
| 105 | $-(CH_2)_{21}-O(CO)C(CH_3)=CH_2$ |
| 106 | $-(CH_2)_2-O(CH_2)_2-OH$ |
| 107 | $-(CH_2)_3-O(CH_2)_2-OH$ |
| 108 | $-(CH_2)_4-O(CH_2)_2-OH$ |

| Verb.-Nr. | R |
|---|---|
| 109 | $-(CH_2)_5-O(CH_2)_2-OH$ |
| 110 | $-(CH_2)_6-O(CH_2)_2-OH$ |
| 111 | $-(CH_2)_7-O(CH_2)_2-OH$ |
| 112 | $-(CH_2)_8-O(CH_2)_2-OH$ |
| 113 | $-(CH_2)_9-O(CH_2)_2-OH$ |
| 114 | $-(CH_2)_{10}-O(CH_2)_2-OH$ |
| 115 | $-(CH_2)_{11}-O(CH_2)_2-OH$ |
| 116 | $-(CH_2)_{12}-O(CH_2)_2-OH$ |
| 117 | $-(CH_2)_{13}-O(CH_2)_2-OH$ |
| 118 | $-(CH_2)_{14}-O(CH_2)_2-OH$ |
| 119 | $-(CH_2)_{15}-O(CH_2)_2-OH$ |
| 120 | $-(CH_2)_{16}-O(CH_2)_2-OH$ |
| 121 | $-(CH_2)_{17}-O(CH_2)_2-OH$ |
| 122 | $-(CH_2)_2-O(CH_2)_2O(CO)CH=CH_2$ |
| 123 | $-(CH_2)_3-O(CH_2)_2O(CO)CH=CH_2$ |
| 124 | $-(CH_2)_4-O(CH_2)_2O(CO)CH=CH_2$ |
| 125 | $-(CH_2)_5-O(CH_2)_2O(CO)CH=CH_2$ |
| 126 | $-(CH_2)_6-O(CH_2)_2O(CO)CH=CH_2$ |
| 127 | $-(CH_2)_7-O(CH_2)_2O(CO)CH=CH_2$ |
| 128 | $-(CH_2)_8-O(CH_2)_2O(CO)CH=CH_2$ |
| 129 | $-(CH_2)_9-O(CH_2)_2O(CO)CH=CH_2$ |
| 130 | $-(CH_2)_{10}-O(CH_2)_2O(CO)CH=CH_2$ |
| 131 | $-(CH_2)_{11}-O(CH_2)_2O(CO)CH=CH_2$ |
| 132 | $-(CH_2)_{12}-O(CH_2)_2O(CO)CH=CH_2$ |
| 133 | $-(CH_2)_{13}-O(CH_2)_2O(CO)CH=CH_2$ |
| 134 | $-(CH_2)_{14}-O(CH_2)_2O(CO)CH=CH_2$ |
| 135 | $-(CH_2)_{15}-O(CH_2)_2O(CO)CH=CH_2$ |
| 136 | $-(CH_2)_{16}-O(CH_2)_2O(CO)CH=CH_2$ |
| 137 | $-(CH_2)_{17}-O(CH_2)_2O(CO)CH=CH_2$ |
| 138 | $-(CH_2)_{18}-O(CH_2)_2O(CO)CH=CH_2$ |
| 139 | $-(CH_2)_{19}-O(CH_2)_2O(CO)CH=CH_2$ |
| 140 | $-(CH_2)_{20}-O(CH_2)_2O(CO)CH=CH_2$ |
| 141 | $-(CH_2)_{21}-O(CH_2)_2O(CO)CH=CH_2$ |
| 142 | $-(CH_2)_2-O(CH_2)_2O(CO)C(CH_3)=CH_2$ |
| 143 | $-(CH_2)_3-O(CH_2)_2O(CO)C(CH_3)=CH_2$ |

| Verb.-Nr. | R |
|---|---|
| 144 | $-(CH_2)_4-O(CH_2)_2O(CO)C(CH_3)=CH_2$ |
| 145 | $-(CH_2)_5-O(CH_2)_2O(CO)C(CH_3)=CH_2$ |
| 146 | $-(CH_2)_6-O(CH_2)_2O(CO)C(CH_3)=CH_2$ |
| 147 | $-(CH_2)_7-O(CH_2)_2O(CO)C(CH_3)=CH_2$ |
| 148 | $-(CH_2)_8-O(CH_2)_2O(CO)C(CH_3)=CH_2$ |
| 149 | $-(CH_2)_9-O(CH_2)_2O(CO)C(CH_3)=CH_2$ |
| 150 | $-(CH_2)_{10}-O(CH_2)_2O(CO)C(CH_3)=CH_2$ |
| 151 | $-(CH_2)_{11}-O(CH_2)_2O(CO)C(CH_3)=CH_2$ |
| 152 | $-(CH_2)_{12}-O(CH_2)_2O(CO)C(CH_3)=CH_2$ |
| 153 | $-(CH_2)_{13}-O(CH_2)_2O(CO)C(CH_3)=CH_2$ |
| 154 | $-(CH_2)_{14}-O(CH_2)_2O(CO)C(CH_3)=CH_2$ |
| 155 | $-(CH_2)_{15}-O(CH_2)_2O(CO)C(CH_3)=CH_2$ |
| 156 | $-(CH_2)_{16}-O(CH_2)_2O(CO)C(CH_3)=CH_2$ |
| 157 | $-(CH_2)_{17}-O(CH_2)_2O(CO)C(CH_3)=CH_2$ |
| 158 | $-(CH_2)_{18}-O(CH_2)_2O(CO)C(CH_3)=CH_2$ |
| 159 | $-(CH_2)_{19}-O(CH_2)_2O(CO)C(CH_3)=CH_2$ |
| 160 | $-(CH_2)_{20}-O(CH_2)_2O(CO)C(CH_3)=CH_2$ |
| 161 | $-(CH_2)_{21}-O(CH_2)_2O(CO)C(CH_3)=CH_2$ |
| 162 | $-(C_6H_4)-O-(CH_2)_3-Br$ |
| 163 | $-(C_6H_4)-O-(CH_2)_4-Br$ |
| 164 | $-(C_6H_4)-O-(CH_2)_5-Br$ |
| 165 | $-(C_6H_4)-O-(CH_2)_6-Br$ |
| 166 | $-(C_6H_4)-O-(CH_2)_7-Br$ |
| 167 | $-(C_6H_4)-O-(CH_2)_8-Br$ |
| 168 | $-(C_6H_4)-O-(CH_2)_9-Br$ |
| 169 | $-(C_6H_4)-O-(CH_2)_{10}-Br$ |
| 170 | $-(C_6H_4)-O-(CH_2)_{11}-Br$ |
| 171 | $-(C_6H_4)-O-(CH_2)_{12}-Br$ (p) |
| 172 | $-(C_6H_4)-O-(CH_2)_{13}-Br$ (p) |
| 173 | $-(C_6H_4)-O-(CH_2)_{14}-Br$ (p) |
| 174 | $-(C_6H_4)-O-(CH_2)_{15}-Br$ (p) |
| 175 | $-(C_6H_4)-O-(CH_2)_{16}-Br$ (p) |
| 176 | $-(C_6H_4)-O-(CH_2)_{17}-Br$ (p) |
| 177 | $-(C_6H_4)-O-(CH_2)_{18}-Br$ (p) |
| 178 | $-(C_6H_4)-O-(CH_2)_{19}-Br$ (p) |

| Verb.-Nr. | R |
|---|---|
| 179 | $-(C_6H_4)-O-(CH_2)_{20}-Br$ (p) |
| 180 | $-(C_6H_4)-O-(CH_2)_{21}-Br$ (p) |
| 181 | $-(C_6H_4)-O-(CH_2)_2-Cl$ (p) |
| 182 | $-(C_6H_4)-O-(CH_2)_3-Cl$ (p) |
| 183 | $-(C_6H_4)-O-(CH_2)_4-Cl$ (p) |
| 184 | $-(C_6H_4)-O-(CH_2)_5-Cl$ (p) |
| 185 | $-(C_6H_4)-O-(CH_2)_6-Cl$ (p) |
| 186 | $-(C_6H_4)-O-(CH_2)_7-Cl$ (p) |
| 187 | $-(C_6H_4)-O-(CH_2)_8-Cl$ (p) |
| 188 | $-(C_6H_4)-O-(CH_2)_9-Cl$ (p) |
| 189 | $-(C_6H_4)-O-(CH_2)_{10}-Cl$ (p) |
| 190 | $-(C_6H_4)-O-(CH_2)_{11}-Cl$ (p) |
| 191 | $-(C_6H_4)-O-(CH_2)_{12}-Cl$ (p) |
| 192 | $-(C_6H_4)-O-(CH_2)_{13}-Cl$ (p) |
| 193 | $-(C_6H_4)-O-(CH_2)_{14}-Cl$ (p) |
| 194 | $-(C_6H_4)-O-(CH_2)_{15}-Cl$ (p) |
| 195 | $-(C_6H_4)-O-(CH_2)_{16}-Cl$ (p) |
| 196 | $-(C_6H_4)-O-(CH_2)_{17}-Cl$ (p) |
| 197 | $-(C_6H_4)-O-(CH_2)_{18}-Cl$ (p) |
| 198 | $-(C_6H_4)-O-(CH_2)_{19}-Cl$ (p) |
| 199 | $-(C_6H_4)-O-(CH_2)_{20}-Cl$ (p) |
| 200 | $-(C_6H_4)-O-(CH_2)_{21}-Cl$ (p) |
| 201 | $-(C_6H_4)-O-(CH_2)_2-OH$ (p) |
| 202 | $-(C_6H_4)-O-(CH_2)_3-OH$ (p) |
| 203 | $-(C_6H_4)-O-(CH_2)_4-OH$ (p) |
| 204 | $-(C_6H_4)-O-(CH_2)_5-OH$ (p) |
| 205 | $-(C_6H_4)-O-(CH_2)_6-OH$ (p) |
| 206 | $-(C_6H_4)-O-(CH_2)_7-OH$ (p) |
| 207 | $-(C_6H_4)-O-(CH_2)_8-OH$ (p) |
| 208 | $-(C_6H_4)-O-(CH_2)_9-OH$ (p) |
| 209 | $-(C_6H_4)-O-(CH_2)_{10}-OH$ (p) |
| 210 | $-(C_6H_4)-O-(CH_2)_{11}-OH$ (p) |
| 211 | $-(C_6H_4)-O-(CH_2)_{12}-OH$ (p) |
| 212 | $-(C_6H_4)-O-(CH_2)_{13}-OH$ (p) |
| 213 | $-(C_6H_4)-O-(CH_2)_{14}-OH$ (p) |

| Verb.-Nr. | R |
|---|---|
| 214 | $-(C_6H_4)-O-(CH_2)_{15}-OH$ (p) |
| 215 | $-(C_6H_4)-O-(CH_2)_{16}-OH$ (p) |
| 216 | $-(C_6H_4)-O-(CH_2)_{17}-OH$ (p) |
| 217 | $-(C_6H_4)-O-(CH_2)_{18}-OH$ (p) |
| 218 | $-(C_6H_4)-O-(CH_2)_{19}-OH$ (p) |
| 219 | $-(C_6H_4)-O-(CH_2)_{20}-OH$ (p) |
| 220 | $-(C_6H_4)-O-(CH_2)_{21}-OH$ (p) |
| 221 | $-(C_6H_4)-O-(CH_2)_2-O(CO)CH=CH_2$ (p) |
| 222 | $-(C_6H_4)-O-(CH_2)_3-O(CO)CH=CH_2$ (p) |
| 223 | $-(C_6H_4)-O-(CH_2)_4-O(CO)CH=CH_2$ (p) |
| 224 | $-(C_6H_4)-O-(CH_2)_5-O(CO)CH=CH_2$ (p) |
| 225 | $-(C_6H_4)-O-(CH_2)_6-O(CO)CH=CH_2$ (p) |
| 226 | $-(C_6H_4)-O-(CH_2)_7-O(CO)CH=CH_2$ (p) |
| 227 | $-(C_6H_4)-O-(CH_2)_8-O(CO)CH=CH_2$ (p) |
| 228 | $-(C_6H_4)-O-(CH_2)_9-O(CO)CH=CH_2$ (p) |
| 229 | $-(C_6H_4)-O-(CH_2)_{10}-O(CO)CH=CH_2$ (p) |
| 230 | $-(C_6H_4)-O-(CH_2)_{11}-O(CO)CH=CH_2$ (p) |
| 231 | $-(C_6H_4)-O-(CH_2)_{12}-O(CO)CH=CH_2$ (p) |
| 232 | $-(C_6H_4)-O-(CH_2)_{13}-O(CO)CH=CH_2$ (p) |
| 233 | $-(C_6H_4)-O-(CH_2)_{14}-O(CO)CH=CH_2$ (p) |
| 234 | $-(C_6H_4)-O-(CH_2)_{15}-O(CO)CH=CH_2$ (p) |
| 235 | $-(C_6H_4)-O-(CH_2)_2-O(CO)C(CH_3)=CH_2$ (p) |
| 236 | $-(C_6H_4)-O-(CH_2)_3-O(CO)C(CH_3)=CH_2$ (p) |
| 237 | $-(C_6H_4)-O-(CH_2)_4-O(CO)C(CH_3)=CH_2$ (p) |
| 238 | $-(C_6H_4)-O-(CH_2)_5-O(CO)C(CH_3)=CH_2$ (p) |
| 239 | $-(C_6H_4)-O-(CH_2)_6-O(CO)C(CH_3)=CH_2$ (p) |
| 240 | $-(C_6H_4)-O-(CH_2)_7-O(CO)C(CH_3)=CH_2$ (p) |
| 241 | $-(C_6H_4)-O-(CH_2)_8-O(CO)C(CH_3)=CH_2$ (p) |
| 242 | $-(C_6H_4)-O-(CH_2)_9-O(CO)C(CH_3)=CH_2$ (p) |
| 243 | $-(C_6H_4)-O-(CH_2)_{10}-O(CO)C(CH_3)=CH_2$ (p) |
| 244 | $-(C_6H_4)-O-(CH_2)_{11}-O(CO)C(CH_3)=CH_2$ (p) |
| 245 | $-(C_6H_4)-O-(CH_2)_{12}-O(CO)C(CH_3)=CH_2$ (p) |
| 246 | $-(C_6H_4)-O-(CH_2)_{13}-O(CO)C(CH_3)=CH_2$ (p) |
| 247 | $-(C_6H_4)-O-(CH_2)_{14}-O(CO)C(CH_3)=CH_2$ (p) |
| 248 | $-(C_6H_4)-O-(CH_2)_2-O(CH_2)_2-OH$ (p) |

| Verb.-Nr. | R |
|---|---|
| 249 | $-(C_6H_4)-O-(CH_2)_3-O(CH_2)_2-OH$ (p) |
| 250 | $-(C_6H_4)-O-(CH_2)_4-O(CH_2)_2-OH$ (p) |
| 251 | $-(C_6H_4)-O-(CH_2)_5-O(CH_2)_2-OH$ (p) |
| 252 | $-(C_6H_4)-O-(CH_2)_6-O(CH_2)_2-OH$ (p) |
| 253 | $-(C_6H_4)-O-(CH_2)_7-O(CH_2)_2-OH$ (p) |
| 254 | $-(C_6H_4)-O-(CH_2)_8-O(CH_2)_2-OH$ (p) |
| 255 | $-(C_6H_4)-O-(CH_2)_9-O(CH_2)_2-OH$ (p) |
| 256 | $-(C_6H_4)-O-(CH_2)_{10}-O(CH_2)_2-OH$ (p) |
| 257 | $-(C_6H_4)-O-(CH_2)_{11}-O(CH_2)_2-OH$ (p) |
| 258 | $-(C_6H_4)-O-(CH_2)_{12}-O(CH_2)_2-OH$ (p) |
| 259 | $-(C_6H_4)-O-(CH_2)_{13}-O(CH_2)_2-OH$ (p) |
| 260 | $-(C_6H_4)-O-(CH_2)_{14}-O(CH_2)_2-OH$ (p) |
| 261 | $-(C_6H_4)-O-(CH_2)_{15}-O(CH_2)_2-OH$ (p) |
| 262 | $-(C_6H_4)-O-(CH_2)_2-O(CH_2)_2O(CO)CH=CH_2$ (p) |
| 263 | $-(C_6H_4)-O-(CH_2)_3-O(CH_2)_2O(CO)CH=CH_2$ (p) |
| 264 | $-(C_6H_4)-O-(CH_2)_4-O(CH_2)_2O(CO)CH=CH_2$ (p) |
| 265 | $-(C_6H_4)-O-(CH_2)_5-O(CH_2)_2O(CO)CH=CH_2$ (p) |
| 266 | $-(C_6H_4)-O-(CH_2)_6-O(CH_2)_2O(CO)CH=CH_2$ (p) |
| 267 | $-(C_6H_4)-O-(CH_2)_7-O(CH_2)_2O(CO)CH=CH_2$ (p) |
| 268 | $-(C_6H_4)-O-(CH_2)_8-O(CH_2)_2O(CO)CH=CH_2$ (p) |
| 269 | $-(C_6H_4)-O-(CH_2)_9-O(CH_2)_2O(CO)CH=CH_2$ (p) |
| 270 | $-(C_6H_4)-O-(CH_2)_{10}-O(CH_2)_2O(CO)CH=CH_2$ (p) |
| 271 | $-(C_6H_4)-O-(CH_2)_{11}-O(CH_2)_2O(CO)CH=CH_2$ (p) |
| 272 | $-(C_6H_4)-O-(CH_2)_{12}-O(CH_2)_2O(CO)CH=CH_2$ (p) |
| 273 | $-(C_6H_4)-O-(CH_2)_{13}-O(CH_2)_2O(CO)CH=CH_2$ (p) |
| 274 | $-(C_6H_4)-O-(CH_2)_{14}-O(CH_2)_2O(CO)CH=CH_2$ (p) |
| 275 | $-(C_6H_4)-O-(CH_2)_2-O(CH_2)_2O(CO)C(CH_3)=CH_2$ (p) |
| 276 | $-(C_6H_4)-O-(CH_2)_3-O(CH_2)_2O(CO)C(CH_3)=CH_2$ (p) |
| 277 | $-(C_6H_4)-O-(CH_2)_4-O(CH_2)_2O(CO)C(CH_3)=CH_2$ (p) |
| 278 | $-(C_6H_4)-O-(CH_2)_5-O(CH_2)_2O(CO)C(CH_3)=CH_2$ (p) |
| 279 | $-(C_6H_4)-O-(CH_2)_6-O(CH_2)_2O(CO)C(CH_3)=CH_2$ (p) |
| 280 | $-(C_6H_4)-O-(CH_2)_7-O(CH_2)_2O(CO)C(CH_3)=CH_2$ (p) |
| 281 | $-(C_6H_4)-O-(CH_2)_8-O(CH_2)_2O(CO)C(CH_3)=CH_2$ (p) |
| 282 | $-(C_6H_4)-O-(CH_2)_9-O(CH_2)_2O(CO)C(CH_3)=CH_2$ (p) |
| 283 | $-(C_6H_4)-O-(CH_2)_{10}-O(CH_2)_2O(CO)C(CH_3)=CH_2$ (p) |

| Verb.-Nr. | R |
|---|---|
| 284 | $-(C_6H_4)-O-(CH_2)_{11}-O(CH_2)_2O(CO)C(CH_3){=}CH_2$ (p) |
| 285 | $-(C_6H_4)-O-(CH_2)_{12}-O(CH_2)_2O(CO)C(CH_3){=}CH_2$ (p) |
| 286 | $-(C_6H_4)-O-(CH_2)_{13}-O(CH_2)_2O(CO)C(CH_3){=}CH_2$ (p) |
| 287 | $-(C_6H_4)-O-(CH_2)_{14}-O(CH_2)_2O(CO)C(CH_3){=}CH_2$ (p) |
| 288 | $-(CH_2)_2-CH(CN)_2$ |
| 289 | $-(CH_2)_3-CH(CN)_2$ |
| 290 | $-(CH_2)_4-CH(CN)_2$ |
| 291 | $-(CH_2)_5-CH(CN)_2$ |
| 292 | $-(CH_2)_6-CH(CN)_2$ |
| 293 | $-(CH_2)_7-CH(CN)_2$ |
| 294 | $-(CH_2)_8-CH(CN)_2$ |
| 295 | $-(CH_2)_9-CH(CN)_2$ |
| 296 | $-(CH_2)_{10}-CH(CN)_2$ |
| 297 | $-(CH_2)_{11}-CH(CN)_2$ |
| 298 | $-(CH_2)_{12}-CH(CN)_2$ |
| 299 | $-(CH_2)_{13}-CH(CN)_2$ |
| 300 | $-(CH_2)_{14}-CH(CN)_2$ |
| 301 | $-(CH_2)_{15}-CH(CN)_2$ |
| 302 | $-(CH_2)_{16}-CH(CN)_2$ |
| 303 | $-(CH_2)_{17}-CH(CN)_2$ |
| 304 | $-(CH_2)_{18}-CH(CN)_2$ |
| 305 | $-(CH_2)_{19}-CH(CN)_2$ |
| 306 | $-(CH_2)_{20}-CH(CN)_2$ |
| 307 | $-(CH_2)_{21}-CH(CN)_2$ |
| 308 | $-(CH_2)_2-O(CH_2)_2-CH(CN)_2$ |
| 309 | $-(CH_2)_3-O(CH_2)_2-CH(CN)_2$ |
| 310 | $-(CH_2)_4-O(CH_2)_2-CH(CN)_2$ |
| 311 | $-(CH_2)_5-O(CH_2)_2-CH(CN)_2$ |
| 312 | $-(CH_2)_6-O(CH_2)_2-CH(CN)_2$ |
| 313 | $-(CH_2)_7-O(CH_2)_2-CH(CN)_2$ |
| 314 | $-(CH_2)_8-O(CH_2)_2-CH(CN)_2$ |
| 315 | $-(CH_2)_9-O(CH_2)_2-CH(CN)_2$ |
| 316 | $-(CH_2)_{10}-O(CH_2)_2-CH(CN)_2$ |
| 317 | $-(CH_2)_{11}-O(CH_2)_2-CH(CN)_2$ |
| 318 | $-(CH_2)_{12}-O(CH_2)_2-CH(CN)_2$ |

| Verb.-Nr. | R |
|---|---|
| 319 | $-(CH_2)_{13}-O(CH_2)_2-CH(CN)_2$ |
| 320 | $-(CH_2)_{14}-O(CH_2)_2-CH(CN)_2$ |
| 321 | $-(CH_2)_{15}-O(CH_2)_2-CH(CN)_2$ |
| 322 | $-(CH_2)_{16}-O(CH_2)_2-CH(CN)_2$ |
| 323 | $-(CH_2)_{17}-O(CH_2)_2-CH(CN)_2$ |
| 324 | $-(C_6H_4)-O-(CH_2)_2-CH(CN)_2$ (p) |
| 325 | $-(C_6H_4)-O-(CH_2)_3-CH(CN)_2$ (p) |
| 326 | $-(C_6H_4)-O-(CH_2)_4-CH(CN)_2$ (p) |
| 327 | $-(C_6H_4)-O-(CH_2)_5-CH(CN)_2$ (p) |
| 328 | $-(C_6H_4)-O-(CH_2)_6-CH(CN)_2$ (p) |
| 329 | $-(C_6H_4)-O-(CH_2)_7-CH(CN)_2$ (p) |
| 330 | $-(C_6H_4)-O-(CH_2)_8-CH(CN)_2$ (p) |
| 331 | $-(C_6H_4)-O-(CH_2)_9-CH(CN)_2$ (p) |
| 332 | $-(C_6H_4)-O-(CH_2)_{10}-CH(CN)_2$ (p) |
| 333 | $-(C_6H_4)-O-(CH_2)_{11}-CH(CN)_2$ (p) |
| 334 | $-(C_6H_4)-O-(CH_2)_{12}-CH(CN)_2$ (p) |
| 335 | $-(C_6H_4)-O-(CH_2)_{13}-CH(CN)_2$ (p) |
| 336 | $-(C_6H_4)-O-(CH_2)_{14}-CH(CN)_2$ (p) |
| 337 | $-(C_6H_4)-O-(CH_2)_{15}-CH(CN)_2$ (p) |
| 338 | $-(C_6H_4)-O-(CH_2)_{16}-CH(CN)_2$ (p) |
| 339 | $-(C_6H_4)-O-(CH_2)_{17}-CH(CN)_2$ (p) |
| 340 | $-(C_6H_4)-O-(CH_2)_{18}-CH(CN)_2$ (p) |
| 341 | $-(C_6H_4)-O-(CH_2)_{19}-CH(CN)_2$ (p) |
| 342 | $-(C_6H_4)-O-(CH_2)_{20}-CH(CN)_2$ (p) |
| 343 | $-(C_6H_4)-O-(CH_2)_{21}-CH(CN)_2$ (p) |
| 344 | $-(C_6H_4)-O-(CH_2)_2-O(CH_2)_2-CH(CN)_2$ (p) |
| 345 | $-(C_6H_4)-O-(CH_2)_3-O(CH_2)_2-CH(CN)_2$ (p) |
| 346 | $-(C_6H_4)-O-(CH_2)_4-O(CH_2)_2-CH(CN)_2$ (p) |
| 347 | $-(C_6H_4)-O-(CH_2)_5-O(CH_2)_2-CH(CN)_2$ (p) |
| 348 | $-(C_6H_4)-O-(CH_2)_6-O(CH_2)_2-CH(CN)_2$ (p) |
| 349 | $-(C_6H_4)-O-(CH_2)_7-O(CH_2)_2-CH(CN)_2$ (p) |
| 350 | $-(C_6H_4)-O-(CH_2)_8-O(CH_2)_2-CH(CN)_2$ (p) |
| 351 | $-(C_6H_4)-O-(CH_2)_9-O(CH_2)_2-CH(CN)_2$ (p) |
| 352 | $-(C_6H_4)-O-(CH_2)_{10}-O(CH_2)_2-CH(CN)_2$ (p) |
| 353 | $-(C_6H_4)-O-(CH_2)_{11}-O(CH_2)_2-CH(CN)_2$ (p) |

| Verb.-Nr. | R |
|---|---|
| 354 | $-(C_6H_4)-O-(CH_2)_{12}-O(CH_2)_2-CH(CN)_2$ (p) |
| 355 | $-(C_6H_4)-O-(CH_2)_{13}-O(CH_2)_2-CH(CN)_2$ (p) |
| 356 | $-(C_6H_4)-O-(CH_2)_{14}-O(CH_2)_2-CH(CN)_2$ (p) |
| 357 | $-(C_6H_4)-O-(CH_2)_{15}-O(CH_2)_2-CH(CN)_2$ (p) |
| 358 | $-(C_6H_4)-O-(CH_2)_{16}-O(CH_2)_2-CH(CN)_2$ (p) |
| 359 | $-(C_6H_4)-O-(CH_2)_{17}-O(CH_2)_2-CH(CN)_2$ (p) |
| 360 | $-(CH_2)_2-CH=CH_2$ |
| 361 | $-(CH_2)_3-CH=CH_2$ |
| 362 | $-(CH_2)_4-CH=CH_2$ |
| 363 | $-(CH_2)_5-CH=CH_2$ |
| 364 | $-(CH_2)_6-CH=CH_2$ |
| 365 | $-(CH_2)_7-CH=CH_2$ |
| 366 | $-(CH_2)_8-CH=CH_2$ |
| 367 | $-(CH_2)_9-CH=CH_2$ |
| 368 | $-(CH_2)_{10}-CH=CH_2$ |
| 369 | $-(CH_2)_{11}-CH=CH_2$ |
| 370 | $-(CH_2)_{12}-CH=CH_2$ |
| 371 | $-(CH_2)_{13}-CH=CH_2$ |
| 372 | $-(CH_2)_{14}-CH=CH_2$ |
| 373 | $-(CH_2)_{15}-CH=CH_2$ |
| 374 | $-(CH_2)_{16}-CH=CH_2$ |
| 375 | $-(CH_2)_{17}-CH=CH_2$ |
| 376 | $-(CH_2)_{18}-CH=CH_2$ |
| 377 | $-(CH_2)_{19}-CH=CH_2$ |
| 378 | $-(CH_2)_{20}-CH=CH_2$ |
| 379 | $-(CH_2)_{21}-CH=CH_2$ |
| 380 | $-(CH_2)_2-O(CH_2)_2-CH=CH_2$ |
| 381 | $-(CH_2)_3-O(CH_2)_2-CH=CH_2$ |
| 382 | $-(CH_2)_4-O(CH_2)_2-CH=CH_2$ |
| 383 | $-(CH_2)_5-O(CH_2)_2-CH=CH_2$ |
| 384 | $-(CH_2)_6-O(CH_2)_2-CH=CH_2$ |
| 385 | $-(CH_2)_7-O(CH_2)_2-CH=CH_2$ |
| 386 | $-(CH_2)_8-O(CH_2)_2-CH=CH_2$ |
| 387 | $-(CH_2)_9-O(CH_2)_2-CH=CH_2$ |
| 388 | $-(CH_2)_{10}-O(CH_2)_2-CH=CH_2$ |

| Verb.-Nr. | R |
|---|---|
| 389 | $-(CH_2)_{11}-O(CH_2)_2-CH=CH_2$ |
| 390 | $-(CH_2)_{12}-O(CH_2)_2-CH=CH_2$ |
| 391 | $-(CH_2)_{13}-O(CH_2)_2-CH=CH_2$ |
| 392 | $-(CH_2)_{14}-O(CH_2)_2-CH=CH_2$ |
| 393 | $-(CH_2)_{15}-O(CH_2)_2-CH=CH_2$ |
| 394 | $-(CH_2)_{16}-O(CH_2)_2-CH=CH_2$ |
| 395 | $-(CH_2)_{17}-O(CH_2)_2-CH=CH_2$ |
| 396 | $-(C_6H_4)-O-(CH_2)_2-O(CH_2)_2-CH=CH_2$ |
| 397 | $-(C_6H_4)-O-(CH_2)_3-O(CH_2)_2-CH=CH_2$ |
| 398 | $-(C_6H_4)-O-(CH_2)_4-O(CH_2)_2-CH=CH_2$ |
| 399 | $-(C_6H_4)-O-(CH_2)_5-O(CH_2)_2-CH=CH_2$ |
| 400 | $-(C_6H_4)-O-(CH_2)_6-O(CH_2)_2-CH=CH_2$ |
| 401 | $-(C_6H_4)-O-(CH_2)_7-O(CH_2)_2-CH=CH_2$ |
| 402 | $-(C_6H_4)-O-(CH_2)_8-O(CH_2)_2-CH=CH_2$ |
| 403 | $-(C_6H_4)-O-(CH_2)_9-O(CH_2)_2-CH=CH_2$ |
| 404 | $-(C_6H_4)-O-(CH_2)_{10}-O(CH_2)_2-CH=CH_2$ |
| 405 | $-(C_6H_4)-O-(CH_2)_{11}-O(CH_2)_2-CH=CH_2$ |
| 406 | $-(C_6H_4)-O-(CH_2)_{12}-O(CH_2)_2-CH=CH_2$ |
| 407 | $-(C_6H_4)-O-(CH_2)_{13}-O(CH_2)_2-CH=CH_2$ |
| 408 | $-(C_6H_4)-O-(CH_2)_{14}-O(CH_2)_2-CH=CH_2$ |
| 409 | $-(C_6H_4)-O-(CH_2)_{15}-O(CH_2)_2-CH=CH_2$ |
| 410 | $-(CH_2)_2-O(CO)CCl=CH_2$ |
| 411 | $-(CH_2)_3-O(CO)CCl=CH_2$ |
| 412 | $-(CH_2)_4-O(CO)CCl=CH_2$ |
| 413 | $-(CH_2)_5-O(CO)CCl=CH_2$ |
| 414 | $-(CH_2)_6-O(CO)CCl=CH_2$ |
| 415 | $-(CH_2)_7-O(CO)CCl=CH_2$ |
| 416 | $-(CH_2)_8-O(CO)CCl=CH_2$ |
| 417 | $-(CH_2)_9-O(CO)CCl=CH_2$ |
| 418 | $-(CH_2)_{10}-O(CO)CCl=CH_2$ |
| 419 | $-(CH_2)_{11}-O(CO)CCl=CH_2$ |
| 420 | $-(CH_2)_{12}-O(CO)CCl=CH_2$ |
| 421 | $-(CH_2)_{13}-O(CO)CCl=CH_2$ |
| 422 | $-(CH_2)_{14}-O(CO)CCl=CH_2$ |
| 423 | $-(CH_2)_{15}-O(CO)CCl=CH_2$ |

| Verb.-Nr. | R |
|---|---|
| 424 | $-(CH_2)_{16}-O(CO)CCl=CH_2$ |
| 425 | $-(CH_2)_{17}-O(CO)CCl=CH_2$ |
| 426 | $-(CH_2)_{18}-O(CO)CCl=CH_2$ |
| 427 | $-(CH_2)_{19}-O(CO)CCl=CH_2$ |
| 428 | $-(CH_2)_{20}-O(CO)CCl=CH_2$ |
| 429 | $-(CH_2)_{21}-O(CO)CCl=CH_2$ |
| 430 | $-(CH_2)_2-O(CH_2)_2-O(CO)CCl=CH_2$ |
| 431 | $-(CH_2)_3-O(CH_2)_2-O(CO)CCl=CH_2$ |
| 432 | $-(CH_2)_4-O(CH_2)_2-O(CO)CCl=CH_2$ |
| 433 | $-(CH_2)_5-O(CH_2)_2-O(CO)CCl=CH_2$ |
| 434 | $-(CH_2)_6-O(CH_2)_2-O(CO)CCl=CH_2$ |
| 435 | $-(CH_2)_7-O(CH_2)_2-O(CO)CCl=CH_2$ |
| 436 | $-(CH_2)_8-O(CH_2)_2-O(CO)CCl=CH_2$ |
| 437 | $-(CH_2)_9-O(CH_2)_2-O(CO)CCl=CH_2$ |
| 438 | $-(CH_2)_{10}-O(CH_2)_2-O(CO)CCl=CH_2$ |
| 439 | $-(CH_2)_{11}-O(CH_2)_2-O(CO)CCl=CH_2$ |
| 440 | $-(CH_2)_{12}-O(CH_2)_2-O(CO)CCl=CH_2$ |
| 441 | $-(CH_2)_{13}-O(CH_2)_2-O(CO)CCl=CH_2$ |
| 442 | $-(CH_2)_{14}-O(CH_2)_2-O(CO)CCl=CH_2$ |
| 443 | $-(CH_2)_{15}-O(CH_2)_2-O(CO)CCl=CH_2$ |
| 444 | $-(CH_2)_{16}-O(CH_2)_2-O(CO)CCl=CH_2$ |
| 445 | $-(CH_2)_{17}-O(CH_2)_2-O(CO)CCl=CH_2$ |
| 446 | $-(C_6H_4)-O-(CH_2)_2-O(CH_2)_2-O(CO)CCl=CH_2$ (p) |
| 447 | $-(C_6H_4)-O-(CH_2)_3-O(CH_2)_2-O(CO)CCl=CH_2$ (p) |
| 448 | $-(C_6H_4)-O-(CH_2)_4-O(CH_2)_2-O(CO)CCl=CH_2$ (p) |
| 449 | $-(C_6H_4)-O-(CH_2)_5-O(CH_2)_2-O(CO)CCl=CH_2$ (p) |
| 450 | $-(C_6H_4)-O-(CH_2)_6-O(CH_2)_2-O(CO)CCl=CH_2$ (p) |
| 451 | $-(C_6H_4)-O-(CH_2)_7-O(CH_2)_2-O(CO)CCl=CH_2$ (p) |
| 452 | $-(C_6H_4)-O-(CH_2)_8-O(CH_2)_2-O(CO)CCl=CH_2$ (p) |
| 453 | $-(C_6H_4)-O-(CH_2)_9-O(CH_2)_2-O(CO)CCl=CH_2$ (p) |
| 454 | $-(C_6H_4)-O-(CH_2)_{10}-O(CH_2)_2-O(CO)CCl=CH_2$ (p) |
| 455 | $-(C_6H_4)-O-(CH_2)_{11}-O(CH_2)_2-O(CO)CCl=CH_2$ (p) |
| 456 | $-(C_6H_4)-O-(CH_2)_{12}-O(CH_2)_2-O(CO)CCl=CH_2$ (p) |
| 457 | $-(C_6H_4)-O-(CH_2)_{13}-O(CH_2)_2-O(CO)CCl=CH_2$ (p) |
| 458 | $-(C_6H_4)-O-(CH_2)_{14}-O(CH_2)_2-O(CO)CCl=CH_2$ (p) |
| 459 | $-(C_6H_4)-O-(CH_2)_{15}-O(CH_2)_2-O(CO)CCl=CH_2$ (p) |

Anwendung

Allgemeine Polymerisationsvorschrift:

In einem Schlenkgefäß wird eine Monomer-Lösung, bestehend aus 10 Gew.-% einer Mischung aus Farbstoffmonomer und mesogenem Monomer in absolutem Toluol mit Azo-bisisobuttersäurenitril (1 mol-%) versetzt. Nach 10-minütigem Hindurchleiten von Stickstoff oder Argon wird die Monomerlösung bei 70 °C thermostatisiert. Nach erfolgter Polymerisation werden die Polymeren von den Monomeren ausschlußchromatographisch am System Sephadex LH 20/Tetrahydrofuran abgetrennt. Nach der Entfernung des Tetrahydrofurans wird das Polymere im Hochvakuum getrocknet. Die quantitative Zusammensetzung der Copolymeren erfolgt mittels UV Spektroskopie und Elementaranalyse. Die Bestimmung der Phasenübergangstemperaturen erfolgt differentialkalorimetrisch. Die Zuordnung der flüssigkristallinen Phasen erfolgt anhand der unter einem mit Heiztisch ausgestatteten Polarisationsmikroskop auftretenden Texturen.

Beispiel Nr. 460

Entsprechend den Angaben der allgemeinen Polymerisationsvorschrift wurden 1,9 g (0,0048 mol) des mesogenen Monomers der Formel

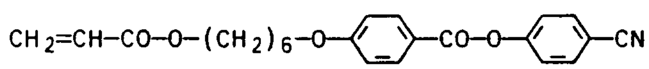

und 0,1 g (0,00018 mol) des Farbstoffmonomers der Formel

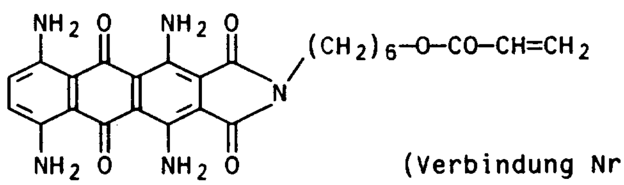

(Verbindung Nr. 70)

in 20 ml absolutem Toluol gelöst und mit 8,2 g Azo-bis-isobuttersäurenitril versetzt. Nach 10-minütigem Hindurchleiten von Argon wurde die Monomerlösung für 75 Stunden bei 70 °C thermostatisiert. Im Abstand von jeweils ca. 20 Stunden wurden dann noch dreimal jeweils 8,22 mg Azo-bis-isobuttersäurenitril zugegeben. Nach insgesamt 140 Stunden wurde das Polymer entsprechend der allgemeinen Vorschrift isoliert.

Die Elementaranalyse lieferte folgendes Ergebnis:

| | C | H | N | O |
|---|---|---|---|---|
| Theorie: | 69.91 | 5.91 | 4.01 | 20.17 |
| Analyse: | 69.6 | 6.0 | 3.8 | 20.0 |

Das Polymer enthielt 3.7 Gew.-% Farbstoff, die Glasstufe lag bei 31,5 °C und der Klärpunkt bei 125,9 °C.

Eine 20 gew.-%ige Lösung des Polymers in Tetrachlorethan wurde auf eine angeriebene Polyimid-Orientierungsschicht aufgeschleudert.

Daten der Disk:

Schichtdicke d = 0,78 µm

max. Extinktion (720 nm) : $E_{\parallel}$ = 0,203

$E_{\perp}$ = 0,0266

Ordnungsgrad: $\bar{S}$ = 0,69

Allgemeine Vorschrift für Polysiloxane

In einem Schlenkgefäß wird eine Lösung, bestehend aus 10 Gew.-% einer Mischung aus Farbstoffmonomer und mesogenem Monomer (zus. 2,2 * $10^{-3}$ mol) sowie Polyhydrogen-methyl-siloxan (2 * $10^{-3}$ mol Si-H) in 60 ml absolutem Toluol mit 2 Tropfen einer Lösung von 32 mg $H_2PtCl_6$ in 2,4 ml Isopropanol versetzt. Die Umsetzung wird in inerter Argonatmosphäre innerhalb von 20 Stunden bei 60 °C durchgeführt. Nach Fällung mit Methanol und mehrmaligem Umfällen aus Dichlormethan/Methanol erfolgt die Trocknung bei 50 bis 80 °C unter vermindertem Druck.

Beispiel Nr. 461

Entsprechend den Angaben der allgemeinen Vorschrift für Polysiloxane wurde ein Copolysiloxan der Formel

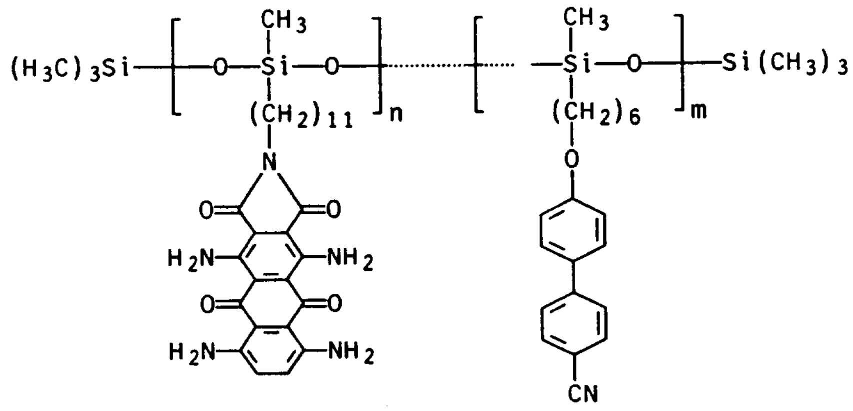

aus der Verbindung Nr. 367 der Formel

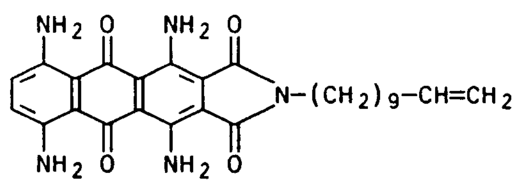

und einem mesogenen Monomer der Formel

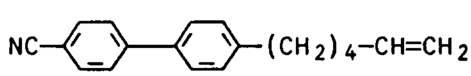

hergestellt, in dem die Seitengruppen statistisch verteilt sind und (n + m) im Mittel 35 ist.

Das erhaltene Polymer hat eine flüssigkristalline Phase, die bei 150 °C in die isotrope Phase übergeht. Die Glasstufe liegt bei ca. -5 °C.

Das mittlere Zahlenmittelmolekulargewicht Mn beträgt 10000.

Beispiel Nr. 462

Analog Beispiel Nr. 461 wurde das Copolymer der Formel

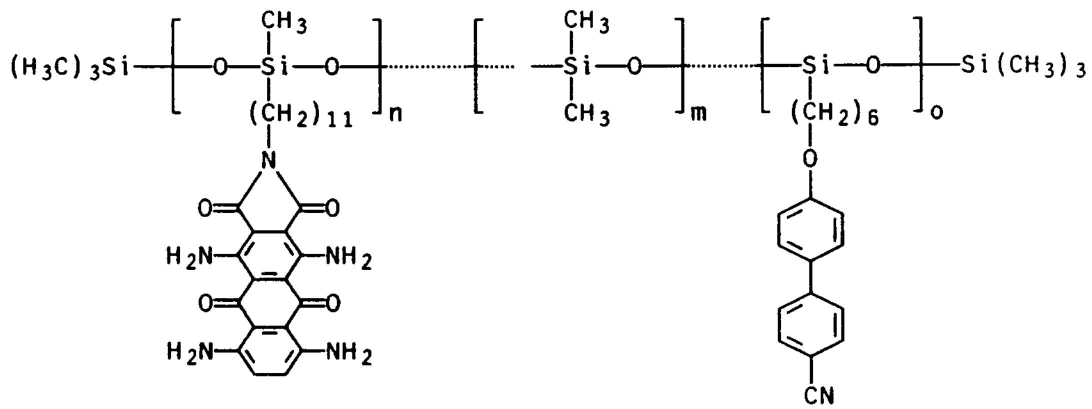

hergestellt, in dem (n + m + o) etwa 35 ist und das Verhältnis n:m:o etwa 6:40:54 beträgt. Die Glasstufe dieses Copolymers liegt bei -5 ° C.

**Patentansprüche**

**1.** Anthrachinonfarbstoffe der Formel I

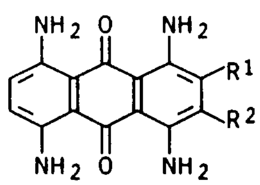

(I),

in der

$R^1$ und $R^2$ jeweils für Cyano oder zusammen für einen Rest der Formel

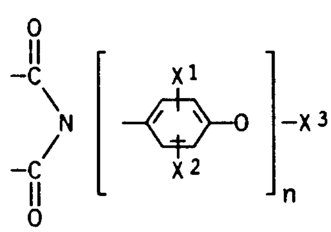

stehen, worin

n 0 oder 1,

$X^1$ und $X^2$ gleich oder verschieden sind und unabhängig voneinander jeweils Wasserstoff, $C_1$-$C_4$-Alkyl oder Halogen und

$X^3$ Wasserstoff oder $C_1$-$C_{26}$-Alkyl, das gegebenenfalls durch ein oder mehrere Sauerstoffatome in Etherfunktion unterbrochen ist und durch Cyano, Halogen, Hydroxy, Amino, Vinyl, $C_1$-$C_6$-Alkanoyloxy, $C_3$-$C_4$-Alkenoyloxy oder $C_3$-$C_4$-Halogenalkenoyloxy substituiert sein kann, bedeuten.

2. Anthrachinonfarbstoffe nach Anspruch 1, die der Formel Ia

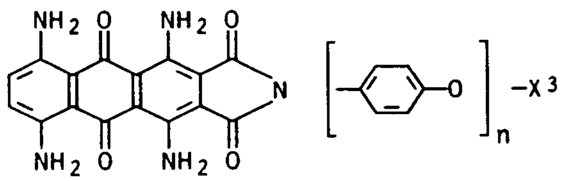

(Ia)

gehorchen, worin

n 0 oder 1 und

$X^3$ Wasserstoff oder $C_1$-$C_{13}$-Alkyl, das gegebenenfalls durch 1 bis 6 Sauerstoffatome in Etherfunktion unterbrochen ist und durch Cyano, Halogen, Hydroxy, Amino, Vinyl, $C_1$-$C_6$-Alkanoyloxy, $C_3$-$C_4$-Alkenoyloxy oder $C_3$-$C_4$-Halogenalkenoyloxy substituiert sein kann,

bedeuten.

3. Anthrachinonfarbstoffe nach Anspruch 2, die der Formel Ia gehorchen, worin

n 0 und

$X^3$ Wasserstoff oder $C_1$-$C_{13}$-Alkyl, das gegebenenfalls durch Vinyl, $C_3$-$C_4$-Alkenoyloxy oder $C_3$-$C_4$-Halogenalkenoyloxy substituiert ist, oder

n 1 und

$X^3$ Wasserstoff oder $C_1$-$C_{13}$-Alkyl, das gegebenenfalls durch 1 bis 6 Sauerstoffatome in Etherfunktion unterbrochen ist und durch Vinyl, $C_3$-$C_4$-Alkenoyloxy oder $C_3$-$C_4$-Halogenalkenoyloxy substituiert sein kann,

bedeuten.

4. Verwendung der Anthrachinonfarbstoffe gemäß Anspruch 1 zur Herstellung von flüssig-kristallinen Polymeren.

## Claims

1. An anthraquinone dye of the formula I

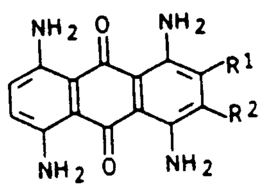

(I)

where

$R^1$ and $R^2$ are each cyano or together a radical of the formula

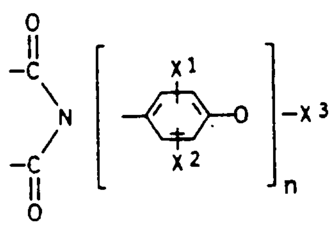

where

n is 0 or 1,

$X^1$ and $X^2$ are identical or different and each is independently of the other hydrogen, $C_1$-$C_4$-alkyl

or halogen, and

$X^3$ is hydrogen or $C_1$-$C_{26}$-alkyl which may be interrupted by one or more oxygen atoms in ether function and substituted by cyano, halogen, hydroxyl, amino, vinyl, $C_1$-$C_6$-alkanoyloxy, $C_3$-$C_4$-alkenoyloxy or $C_3$-$C_4$-haloalkenoyloxy.

**2.** An anthraquinone dye as claimed in claim 1, conforming to the formula Ia

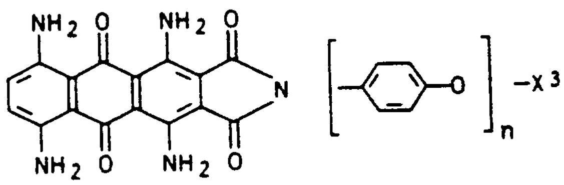

(Ia)

where

n is 0 or 1 and

$X^3$ is hydrogen or $C_1$-$C_{13}$-alkyl which may be interrupted by from 1 to 6 oxygen atoms in ether function and substituted by cyano, halogen, hydroxyl, amino, vinyl, $C_1$-$C_6$-alkanoyloxy, $C_3$-$C_4$-alkenoyloxy or $C_3$-$C_4$-haloalkenoyloxy.

**3.** An anthraquinone dye as claimed in claim 2, conforming to the formula Ia where

n is 0 and

$X^3$ is hydrogen or $C_1$-$C_{13}$-alkyl which may be substituted by vinyl, $C_3$-$C_4$-alkenoyloxy or $C_3$-$C_4$-haloalkenoyloxy, or

n is 1 and

$X^3$ is hydrogen or $C_1$-$C_{13}$-alkyl which may be interrupted by from 1 to 6 oxygen atoms in ether function and substituted by vinyl, $C_3$-$C_4$-alkenoyloxy or $C_3$-$C_4$-haloalkenoyloxy.

**4.** A method of using an anthraquinone dye as claimed in claim 1 for preparing a liquid crystalline polymer.

## Revendications

**1.** Colorants anthraquinoniques de formule I

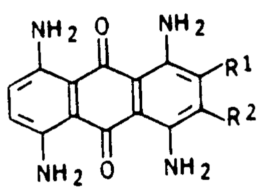

(I),

dans laquelle

$R^1$ et $R^2$ sont mis chacun pour un reste cyano ou forment ensemble un reste de formule

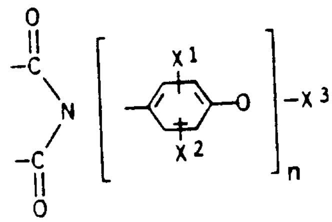

où

- n est mis pour 0 ou 1,
- $X^1$ et $X^2$ sont identiques ou différents et représentent chacun, indépendamment l'un de l'autre, un atome d'hydrogène, un reste alkyle en $C_1$-$C_4$ ou un atome d'halogène, et
- $X^3$ représente un atome d'hydrogène ou un reste alkyle en $C_1$-$C_{26}$ qui est éventuellement interrompu par un ou plusieurs atomes d'oxygène en fonction éther et qui peut être substitué par des restes cyano, des atomes d'halogène ou des groupements hydroxy, amino, vinyle, alcanoyloxy en $C_1$-$C_6$, alcénoyloxy en $C_3$-$C_4$ ou halogénoalcénoyloxy en $C_3$-$C_4$.

**2.** Colorants anthraquinoniques selon la revendication 1, qui répondent à la formule Ia

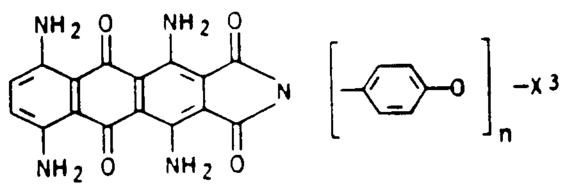

(Ia)

dans laquelle

- n est mis pour 0 ou 1 et
- $X^3$ représente un atome d'hydrogène ou un reste alkyle en $C_1$-$C_{13}$ qui est éventuellement interrompu par 1 à 6 atomes d'oxygène en fonction éther et qui peut être substitué par des restes cyano, des atomes d'halogène ou des groupements hydroxy, amino, vinyle, alcanoyloxy en $C_1$-$C_6$, alcénoyloxy en $C_3$-$C_4$ ou halogénoalcénoyloxy en $C_3$-$C_4$.

**3.** Colorants anthraquinoniques selon la revendication 2, qui répondent à la formule Ia dans laquelle

- n est mis pour 0 et
- $X^3$ représente un atome d'hydrogène ou un reste alkyle en $C_1$-$C_{13}$ qui est éventuellement substitué par des restes vinyle, alcénoyloxy en $C_3$-$C_4$ ou halogénoalcénoyloxy en $C_3$-$C_4$.

ou

- n est mis pour 1 et
- $X^3$ représente un atome d'hydrogène ou un reste alkyle en $C_1$-$C_{13}$ qui est éventuellement interrompu par 1 à 6 atomes d'oxygène en fonction éther et qui peut être substitué par des restes vinyle, alcénoyloxy en $C_3$-$C_4$ ou halogénoalcénoyloxy en $C_3$-$C_4$.

**4.** Utilisation des colorants anthraquinoniques selon la revendication 1 pour la préparation de polymères cristallins liquides.